# DEMANDE DE BREVET EUROPEEN

(11) **EP 1 003 318 A1**
(43) Date de publication de la demande: **24.05.2000**
(21) Numéro de dépôt: 99480095.1
(22) Date de dépôt: 13.10.1999
(51) Int. Cl.: H04M 3/42, H04M 11/06

(54) **Routeur téléphonique configurable par serveur télématique**

(30) Priorité: 14.10.1998 FR 9812835
(71) Demandeur: Wauquier, Mathias, 06300 Nice (FR)
(72) Inventeur: Wauquier, Mathias, 06300 Nice (FR)

(57) **Abrégé**

L'invention consiste en un routeur téléphonique muni d'une interface pour terminal télématique. Le terminal permet de se connecter sur un serveur télématique qui, par l'intermédiaire de l'interface, peut configurer le fonctionnement du routeur téléphonique. Ce routeur peut être soit intégré dans un terminal téléphonique (téléphone, fax, modem...) soit externe, présenté sous la forme d'un boîtier interface entre une ligne téléphonique et un terminal téléphonique.

## Description

La présente invention concerne un dispositif de routage téléphonique, qui est configurable par serveur télématique.
Lorsqu'un usager du téléphone dispose de plusieurs opérateurs téléphoniques, il peut choisir, en fonction de son appel, l'opérateur le mieux adapté (coût, service, performance...).
Les routeurs sont des dispositifs connus, internes ou externes aux terminaux téléphoniques qui effectuent le choix et la sélection de l'opérateur, de façon transparente pour l'usager.
Pour être efficace, chaque routeur doit avoir sa propre configuration, pour prendre en compte notamment le lieu d'appel ainsi que les abonnements contractés par l'usager. Cette configuration n'est accessible qu'aux professionnels et usagers avertis.
L'objet de l'invention est de simplifier cette configuration. L'invention consiste en un routeur téléphonique constitué d'un terminal téléphonique (téléphone, fax, modem...) ou d'un boîtier interface entre une ligne téléphonique et un terminal téléphonique, muni d'une interface pour communiquer avec un terminal télématique (minitel, ordinateur + modem,...).
Grâce au terminal télématique, l'usager peut de connecter à un serveur télématique pour qu'il puisse configurer localement le routeur par l'intermédiaire de l'interface dont est muni le routeur.

Le document US 5 481 598 A décrit un poste téléphonique numérique (norme ISDN) pilotable extérieurement. Il s'agit de faire profiter aux systèmes extérieurs, des ressources du poste (capacité d'appel, transmission de données via ISDN ...). Notre dispositif ne dispose d'aucune ressource externalisable et de plus ne dispose pas de ressource pour recevoir des données (type modem). Ainsi, le terminal télématique (ex minitel) est utilisé comme ressource extérieure pour cela.

Le document EP 0 654 928 A décrit un poste téléphonique analogique muni de toutes les ressources téléphoniques nécessaires à son bon fonctionnement sauf en ce qui concerne son intelligence qui est déportée sur un système type ordinateur via une liaison série. Notre invention dispose de sa propre intelligence mais ne dispose pas de moyen de communication (type modem) avec un serveur télématique. Cette ressource est récupérée d'un terminal télématique extérieur à notre dispositif. Une fois les informations récupérées, notre système est complètement autonome.

Le document FR 2 686 470 A décrit un dispositif visant à développer les fonctionnalités d'un minitel en utilisant le modem V27 ter - V29 d'un télécopieur par exemple, en lieu et place du modem V23 du minitel afin d'accélérer les flux de données. Dans notre invention, le minitel est utilisé pour ses fonctionnalités de base. On ne cherche pas à modifier les capacités du minitel grâce à un autre équipement mais à modifier les capacités du routeur téléphonique grâce au minitel.

L'invention décrite dans le document FR 2 677 517 A nécessite un autocommutateur téléphonique capable de dialoguer avec un serveur videotext pour établir des communications. Notre invention ne demande aucune action particulière d'un quelconque autocommutateur si ce n'est de permettre l'établissement de bout en bout d'une communication téléphonique, fonctionnalité de base d'un autocommutateur.

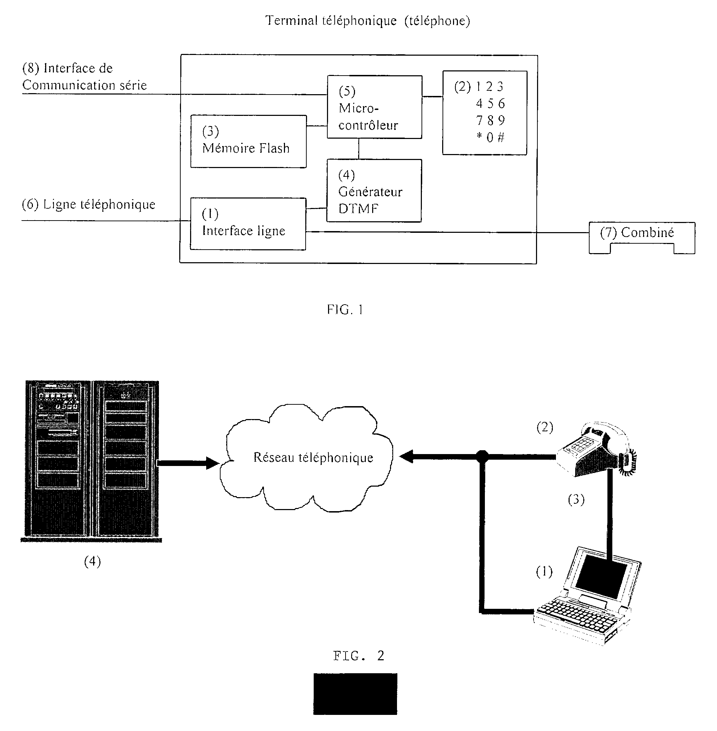

La figure 1 représente un exemple de réalisation simple pour ligne téléphonique analogique. Elle est constituée d'un téléphone comportant une interface ligne (1), un clavier (2), de la mémoire flash (3), un générateur de fréquence de numérotation téléphonique DTMF (4) le tout contrôlé et piloté par un micro-contrôleur (5). Ce téléphone doit être relié à une ligne téléphonique (6) et être équipé d'un combiné (7). Le micro-contrôleur fournit une interface de communication série (8) qui permet, grâce à un terminal de saisie, de modifier les informations nécessaires pour effectuer le routage téléphonique.

La figure 2 représente une mise en oeuvre typique pour l'exemple précédent. Elle est constituée d'un minitel (1) et d'un téléphone routeur (2) raccordés de façon classique sur la ligne téléphonique, c'est à dire que le téléphone est déconnecté de la ligne pendant la connexion du minitel. Le minitel est raccordé au téléphone routeur par sa prise péri-informatique (3). L'usager se connecte au serveur télématique (4) de façon normale. Le serveur peut alors piloter à distance la prise péri-informatique du minitel pour configurer le téléphone routeur. Il est possible de récupérer l'alimentation disponible sur la prise péri-informatique du minitel pour alimenter le téléphone routeur durant cette opération.

## Revendications

1. Dispositif de routage téléphonique caractérisé par un terminal téléphonique (téléphone, fax, modem...) muni d'une interface pour terminal télématique (minitel, ordinateur + modem,...) permettant à un serveur télématique de configurer le fonctionnement du terminal téléphonique.

2. Dispositif de routage téléphonique caractérisé par un boîtier interface se raccordant entre un terminal téléphonique (téléphone, fax, modem...) et une ligne téléphonique, muni d'une interface pour terminal télématique (minitel, ordinateur + modem,...) permettant à un serveur télématique de configurer le fonctionnement du boîtier interface.
